(19) Europäisches Patentamt
European Patent Office
Office européen des brevets

(11) EP 2 613 905 B1

(12) EUROPEAN PATENT SPECIFICATION

(45) Date of publication and mention
of the grant of the patent:
01.11.2023 Bulletin 2023/44

(21) Application number: 11758329.4

(22) Date of filing: 09.09.2011

(51) International Patent Classification (IPC):
B23K 10/00 $^{(2006.01)}$

(52) Cooperative Patent Classification (CPC):
B23K 10/00; F23D 14/42; F23D 14/54;
H05H 1/3423

(86) International application number:
PCT/US2011/050997

(87) International publication number:
WO 2012/034017 (15.03.2012 Gazette 2012/11)

(54) **FORWARD FLOW, HIGH ACCES CONSUMABLES FOR A PLASMA ARC CUTTING TORCH**

VORWÄRTSFLUSS-VERBRAUCHSMATERIALIEN MIT HOHER ZUGÄNGLICHKEIT FÜR EINEN PLASMASCHNEIDBRENNER

CONSOMMABLES À ÉCOULEMENT DIRECT HAUTEMENT ACCESSIBLES POUR TORCHE DE DÉCOUPE À PLASMA

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 09.09.2010 US 878512

(43) Date of publication of application:
17.07.2013 Bulletin 2013/29

(60) Divisional application:
23175877.2 / 4 234 145

(73) Proprietor: Hypertherm, Inc.
Hanover, NH 03755 (US)

(72) Inventors:
• SHIPULSKI, Michael E.
Etna
NH 03750 (US)
• SANDERS, Nicholas A.
Norwich
VT 05055 (US)
• JASON, Jay L.
Claremont
NH 03743 (US)
• MATHER, Jonathan
Cornish
NH 03746 (US)
• TWAROG, Peter J.
West Lebanon
NH 03784 (US)

(74) Representative: Barker Brettell LLP
100 Hagley Road
Edgbaston
Birmingham B16 8QQ (GB)

(56) References cited:
EP-A1- 0 079 019      WO-A2-2008/033905
GB-A- 2 365 810      JP-A- S5 668 581
US-A- 5 726 415      US-A1- 2008 217 305

**Description**

**RELATED APPLICATIONS**

**TECHNICAL FIELD**

The present invention relates to consumables for a plasma arc cutting torch, and more specifically, to forward flow, high access consumables for a plasma arc cutting torch.

**BACKGROUND**

Plasma arc torches are widely used for the high temperature processing (e.g., cutting, welding, and marking) of metallic materials. A plasma arc torch generally includes a torch body, an electrode mounted within the body, an emissive insert disposed within a bore of the electrode, a nozzle with a central exit orifice, a shield, electrical connections, passages for cooling and arc control fluids, a swirl ring to control the fluid flow patterns, and a power supply. The torch produces a plasma arc, which is a constricted ionized jet of a plasma gas with high temperature and high momentum. Gases used in the torch can be non-reactive (e.g., argon or nitrogen), or reactive (e.g., oxygen or air).

In the process of plasma arc cutting or marking a metallic workpiece, a pilot arc is first generated between the electrode (cathode) and the nozzle (anode) within a torch. When operating in this pilot arc mode, the electrode can separate from the nozzle, forming an arc between the electrode and nozzle, e.g., as described in U.S. Pat. No. 4,791,268. The gas passing between the nozzle and the electrode is ionized to form a plasma, which then exits an exit orifice of the nozzle. The gas can be passed through a swirl ring to impart a tangential motion to the gas as it passes through the torch, thereby improving torch performance. When the torch is moved near a workpiece, the arc contacts the workpiece and the current return path then transfers from the nozzle to the workpiece. Generally, the torch is operated in this transferred plasma arc mode, which is characterized by the flow of ionized plasma gas from the electrode to the workpiece, with the current return path being from the workpiece back to the power supply. The plasma thus generated can be used to cut, weld, or mark workpieces.

In addition to the blowback operation described above, alternative known techniques include blow forward technologies, in which the nozzle separates from a stationary nozzle. See, e.g., U.S. Pat. No. 5,994,663.

Dimensions of the torch are determine by the size and configuration of the consumables discussed above, e.g., the electrode, swirl ring, nozzle, and shield. Design of these consumables is highly technical and has a dramatic impact on torch life and performance. The electrode is generally surrounded by a swirl ring, a nozzle, and in some configurations a shield. All of these components, and the manner in which they are designed and combined, affect the overall torch dimensions, configuration, weight, cost and other parameters.

Furthermore, hand-held torches are now being used in ever more intricate cutting operations, including those where access to portions of the workpiece can be difficult. Standard torches, due to their dimensions, may not be usable in hard to reach areas such as channels and corners. In addition, most hand-held plasma cutting torches have a torch head that is fixed at an angle between about 90° and about 115° relative to the handle. While this configuration is well suited for many cutting applications, it is not ideal for cutting into sharp corners or in pockets and for many gouging applications.

The torch consumables (e.g., the electrode, nozzle, swirl ring and shield) are exposed to high temperatures. Standard torches cannot run at a high percentage duty cycle without melting the torch components and causing other temperature-related problems in the torch. The torch consumables can be cooled utilizing various techniques, such as water injection cooling to cool the nozzle and/or shield, liquid cooling in the electrode and/or about nozzle, or vent holes to cool the shield as described in U.S. Pat. No. 5,132 512. The cooling of plasma arc torch consumables can become even harder when the plasma arc torch is run at high currents (e.g., greater than about 15 Amps) and/or when the plasma arc torch is entirely gas cooled.

US 5,726,415 discloses a torch tip according to the preamble of claim 1.

**SUMMARY OF THE INVENTION**

What is needed are high-access consumables in a plasma arc torch that have the ability to plasma cut in deep channels and around hard to reach corners. For example, these high access consumables can have a longer length than known plasma arc torch consumables while maintaining adequate cooling capability when the plasma arc torch is operated such that premature failure of the consumables does not occur. What are also needed are high-access consumables in a plasma arc torch that have the ability to cut through inner and outer metal door skins from one side of the door.

However, having longer consumables can result in insufficient cooling of the plasma arc torch and the overheating and melting of the consumable parts. The over heating can be due, at least in part, to the fact that prior cooling techniques utilized a heat exchanger on the back end of the electrode, away from the insert. When the consumables are extended, this heat exchanger is moved further away from the heat source (e.g., the insert of the electrode). The further away the cooling mechanism is from the heat source, the more inefficient the cooling becomes. As a result, the extended consumables overheat and melt prematurely. This overheating is particularly pronounced when the plasma arc torch is being operated at currents above about 15 Amps, or more particularly, operated at currents above about 60 Amps. The overheating is also particularly pronounced when the plasma arc torch is entirely gas cooled (e.g., cooled by air).

It may also be desirable to have a plasma cutting torch that can operate at high cutting currents and be entirely gas-cooled without the premature failure of consumables, particularly without the premature failure of extended consumables. What is needed are consumables that are capable of operating in a hand held plasma torch with a forward-flow cooling design where substantially all of the cooling gas exits through the front of the torch tip and almost no cooling gas flows back toward a handle of the plasma torch (although blowback technology can optionally be used).

The invention features a torch tip for a hand held plasma torch, the handheld plasma torch having a trigger and a torch tip mount, the torch tip comprising a substantially hollow nozzle, the nozzle having an end face through which a plasma exit orifice is disposed, the end face having at least one supplemental orifice disposed relative to the plasma exit orifice; such that in use substantially all of a cooling gas can be used to cool the consumables at the tip of the torch and substantially all of the cooling gas can exit through the supplemental orifices; an electrode disposed relative to the nozzle; a swirl ring; and a housing disposed relative to the nozzle and the electrode, the nozzle, electrode and housing form an assembled torch tip having a distal end and a proximal end, the proximal end of the assembled torch tip configured to couple to the torch tip mount, wherein a distance from the distal end to the proximal end of the assembled torch tip is greater than about 7.6 cm (3 inches).

The at least one supplemental orifice can be canted or the at least one supplemental orifice can be linear/straight. Substantially all cooling gas can exit through the at least one supplemental orifice.

The nozzle can also include at least one orifice disposed through the body of the nozzle. The at least one orifice can be canted or the at least one orifice can be linear/straight.

The nozzle body can include at least one orifice disposed through the body of the nozzle. In some embodiment, the nozzle body includes at least one supplemental orifice disposed through the end face of the nozzle and at least one orifice disposed through the body of the nozzle.

The length of the nozzle can be greater than about 5.1, 7.6, 10.2, 12.7, 15.2, 17.8, 20.3, 22.9, 25.4, 27.9, 30.5, 33.0, 35.6, 38.1, 40.7, 43.2, 45.7, 48.3, or 50.8 cm (2, 3, 4, 5, 6, 7, 8, 9, 10, 11, 12, 13, 14, 15, 16, 17, 18, 19, or 20 inches). In some embodiments, the length of the nozzle is greater than about 6.4, 8.9, 11.4, 14.0, 16.5, 19.1, 21.6, 24.1, 26.7, 29.2, 31.8, 34.3, 36.8, 39.4, 41.9, 44.5, 47.0, 49.5, or 52.1 cm (2.5, 3.5, 4.5, 5.5, 6.5, 7.5, 8.5, 9.5, 10.5, 11.5, 12.5, 13.5, 14.5, 15.5, 16.5, 17.5, 18.5, 19.5, or 20.5 inches).

The ratio of the length to the width of the nozzle can be greater than about 4, 5, 6, 7, 8, 9, 10, 11, 12, 13, 14, 15, 16, 17, 18, 19, or 20. In some embodiments, the ratio of the length to the width of the nozzle is greater than about 4.5, 5.5, 6.5, 7.5, 8.5, 9.5, 10.5, 11.5, 12.5, 13.5, 14.5, 15.5, 16.5, 17.5, 18.5, 19.5, or 20.5.

The housing can include an adapter capable of extending the distance from the distal end to the proximal end of the assembled torch tip. The distance from the distal end to the proximal end of the assembled torch tip can be greater than about 12.7, 15.2, 17.8, 20.3, 22.9, 25.4, 27.9, 30.5 33.0, 35.6, 38.1, 40.7, 43.2, 45.7, 48.3, or 50.8 cm (5, 6, 7, 8, 9, 10, 11, 12, 13, 14, 15, 16, 17, 18, 19, or 20 inches). In some embodiments, the distance from the distal end to the proximal end of the assembled torch tip can be greater than about 8.9, 11.4, 14.0, 16.5, 19.1, 21.6, 24.1, 26.7, 29.2, 31.8, 34.3, 36.8, 39.4, 41.9, 44.5, 47.0, 49.5, or 52.1 cm (3.5, 4.5, 5.5, 6.5, 7.5, 8.5, 9.5, 10.5, 11.5, 12.5, 13.5, 14.5, 15.5, 16.5, 17.5, 18.5, 19.5, or 20.5 inches).

In some embodiments, the torch tip also includes at least one heat exchanging element disposed on the nozzle and in thermal communication with a cooling gas. The at least one heat exchanging element can be disposed on an outer surface of the nozzle. The at least one heat exchanging element can be disposed on an inner surface of the nozzle.

## BRIEF DESCRIPTION OF THE DRAWINGS

The foregoing and other objects, features and advantages of the invention, as well as the invention itself, will be more fully understood from the following illustrative description, when read together with the accompanying drawings which are not necessarily to scale.

FIG. **1** is a cross-sectional view of a plasma arc torch tip.

FIG. **2** is a cross-sectional view of a nozzle.

FIG. **3** is a perspective view of an electrode.

FIG. **4** is a cross-sectional view of a torch tip, including a nozzle, electrode and swirl ring, according to an illustrative embodiment of the invention.

FIG. **5** is a perspective view of a nozzle.

FIG. **6** is a cross-sectional view of a nozzle assembly.

FIG. **7** is a side view of a plasma arc torch adapter for extending a plasma arc torch.

FIG. **8** is a cross-sectional view of a torch tip, according to an illustrative embodiment of the invention.

FIG. **9** is an illustration of a torch tip, according to an illustrative embodiment of the invention.

FIG. **10** is a graph showing torch body temperature versus time.

FIG. **11** is a graph showing cathode temperatures versus time.

FIG. **12** is a cross-sectional view of a torch tip showing gas flow, according to an illustrative embodiment of the invention.

FIG. **13** is a cross-sectional view of a torch tip showing nozzle and electrode diameters and lengths, according to an illustrative embodiment of the invention.

FIG. **14** is a cross-sectional view of a torch tip, according to an illustrative embodiment of the invention.

FIG. **15** is a cross-sectional view of a torch tip, according to an illustrative embodiment of the invention.

## DETAILED DESCRIPTION

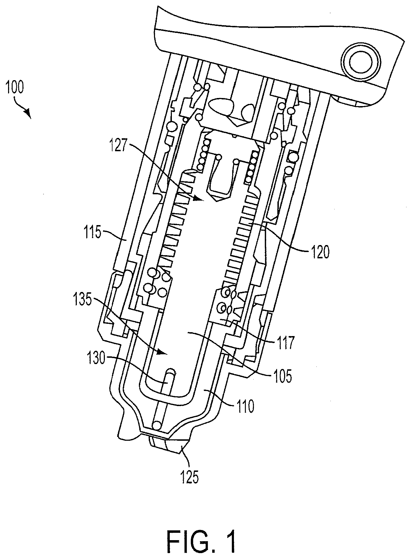

FIG. **1** shows a cross-sectional view of a plasma arc torch **100.** A plasma torch tip is comprised of a variety of different consumables, for example, an electrode **105,** a nozzle **110,** a retaining cap **115,** a swirl ring **117,** or a shield **125.** The nozzle **110** has a central exit orifice mounted within a torch body. The torch and torch tip can include electrical connections, passages for cooling, and passages for arc control fluids (e.g., plasma gas). The shield **125** can be used to prevent molten spatter from damaging the other components of the torch, for example, the electrode **105,** nozzle **110,** retaining cap **115,** or swirl ring **120.** The electrode **105** can include a heat exchanger **120** at a proximal end **127** of the electrode **105.**

A plasma arc torch that is capable of reaching into hard to access areas (e.g., channels or corners) can have consumables that are elongated to provide the added reach required to access these types of locations. These longer length consumables (e.g., "pointy" consumables) can also increase the visibility of an operator using the plasma arc torch. This increased visibility allows an operator to see a cut that is being made because the torch handle is further away from the cut, which creates clearance for the operator to view the cut.

However, having longer consumables can result in insufficient cooling of the plasma arc torch and the overheating and melting of the consumable parts. The over heating can be due, at least in part, to the fact that prior cooling techniques utilized a heat exchanger on the back end of the electrode, away from the insert. When the consumables are extended, this heat exchanger is moved further away from the heat source (e.g., the insert of the electrode). The further away the cooling mechanism is from the heat source, the more inefficient the cooling becomes. As a result, the extended consumables overheat and melt prematurely. This overheating is particularly pronounced when the plasma arc torch is being operated at currents above about 15 Amps, or more particularly, operated at currents above about 60 Amps. The overheating is also particularly pronounced when the plasma arc torch is entirely gas cooled (e.g., cooled by air).

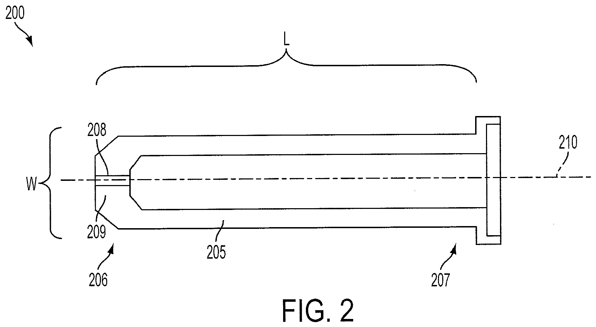

In some embodiments, the consumables (e.g., nozzle, electrode, retaining cap, shield, and/or swirl ring) are longer than about 5.1 cm (2 inches). FIG. **2** shows a cross-sectional view of a nozzle **200.** The nozzle **200** includes a body **205** that is substantially hollow with a first end **206** and a second end **207.** The hollow nozzle body **205** is capable of receiving an electrode (e.g., the electrode **105** of FIG. **1**). A plasma exit orifice **208** is disposed through an end face **209** at the first end **206** of the body **205.**

The nozzle body **205** defines a longitudinal axis **210.** The nozzle body **205** has a length **L** along the longitudinal axis **210** from the first end **206** to the second end **207** of the nozzle body **205.** The first end **206** of the nozzle body has a width **W.** A ratio of the length **L** of the nozzle body **205** to the width **W** of the nozzle body **205** is greater than about 3.

For example, to have a ratio of L/W of greater than about 3, the length of the nozzle body **205** can be about 8.9 cm (3.5 inches) and the width of the nozzle body can be about 1.3 cm (0.5 inches). This provides a ratio **of L/W** equal to 3.5 inches/0.5 inches or a ratio of **L/W** of 7.

The length of the nozzle can be greater than about 2 inches. The length of the nozzle can be greater than about 7.6, 10.2, 12.7, 15.2, 17.8, 20.3, 22.9, 25.4, 27.9, 30.5, 33.0, 35.6, 38.1, 40.7, 43.2, 45.7, 48.3, or 50.8 cm (3, 4, 5, 6, 7, 8, 9, 10, 11, 12, 13, 14, 15, 16, 17, 18, 19, or 20 inches). In some embodiments, the length of the nozzle is greater than about 6.4, 8.9, 11.4, 14.0, 16.5, 19.1, 21.6, 24.1, 26.7, 29.2, 31.8, 34.3, 36.8, 39.4, 41.9, 44.5, 47.0, 49.5, or 52.1 cm (2.5, 3.5, 4.5, 5.5, 6.5, 7.5, 8.5, 9.5, 10.5, 11.5, 12.5, 13.5, 14.5, 15.5, 16.5, 17.5, 18.5, 19.5, or 20.5 inches). For example, the nozzle can have a length greater than about 53.3 cm (21 inches) without departing from the scope of the invention.

The ratio of the length to the width of the nozzle can be greater than about 4, 5, 6, 7, 8, 9, 10, 11, 12, 13, 14, 15, 16, 17, 18, 19, or 20. The ratio of the length to the width of the nozzle can be greater than about 4.5, 5.5, 6.5, 7.5, 8.5, 9.5, 10.5, 11.5, 12.5, 13.5, 14.5, 15.5, 16.5, 17.5, 18.5, 19.5, or 20.5. For example, the nozzle can have a ratio greater than about 21.

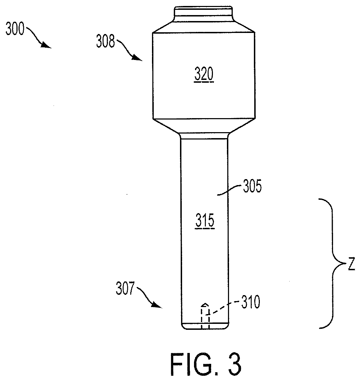

Similarly, the electrode (e.g., electrode **105** of FIG. **1**) can be designed so that the plasma arc torch is capable of reaching into hard to access areas. Proper design of the electrode is a key requirement to achieving a torch stack up that has high access and high visibility features. A reliable high access and high visibility torch requires an electrode with proper ratios and tolerances. FIG. **3** shows an electrode **300** having an elongated body **305** that can achieve the high access and high visibility requirements mentioned herein. The electrode body **305** has a first end **307** and a second end **308**. The electrode body **305** also defines a bore **310** in the first end **307** for receiving an insert (e.g., hafnium). The electrode has a first body portion **315** extending from the first end **307** and a second body portion **320** extending to the second end **308**. The first and second body portions **315, 320,** respectively, can be formed as an integral assembly, e.g., from a single piece of metal (such as copper).

Although elongating the consumables, for example, elongating the nozzle **200** of FIG. **2** and/or the electrode **300** of FIG. **3,** can extend the reach, visibility and pointiness of the plasma arc torch, the life of the consumables is greatly deceased due to over heating when prior art cooling techniques are used. Prior art cooling techniques typically provide for a heat exchanger at the opposite end of the electrode as the hafnium insert. The cooling fluid performs most of its cooling function at the location of the heat exchanger. However, when the hafnium insert (e.g., the location where a substantial amount of heat is being generated), a heat exchanger located at a distance from the insert is insufficient for cooling purposes.

For example, referring to FIG. **1,** elongating electrode **105** results in the hafnium insert **130** being further away from the heat exchanger **120**. The heat exchanger **120,** which is configured to remove heat from the electrode and other consumables when in communication with a cooling fluid, can no longer effectively remove sufficient heat from the proximal end **135** of the electrode **105,** resulting in overheating and melting of the consumable parts. This overheating is particularly pronounced when the plasma arc torch is being operated at currents above about 15 Amps, or more particularly, operated at currents above about 60 Amps. The overheating is also particularly pronounced when the plasma arc torch is entirely gas cooled (e.g., cooled by air). In some embodiments, the torch is cooled by oxygen and/or nitrogen in various ratios.

To compensate for the inefficient cooling of the consumables, the consumables and cooling path can be designed so that substantially all of the cooling occurs at the front end of the torch tip near the insert of the electrode. For example, the cooling gas can flow between the electrode and nozzle, passing through a swirl ring and flowing through the plasma chamber and out the end face of the nozzle. A small portion of this gas can be carried to the nozzle orifice as a swirling cut gas. By cooling in this way, the distance from the nozzle tip to the torch can be greatly extended. This combination of long consumables with forward flow cooling provides the advantages described herein without sacrificing consumable life.

In some embodiments, substantially all of the cooling gas (e.g., a majority of the cooling gas, greater than 75% of the cooling gas, greater than about 80% of the cooling gas, greater than about 95% of the cooling gas, or about 99% of the cooling gas) exits through the front, or tip, of the plasma arc torch and almost no cooling gas is allowed to flow back into the torch (however, the pressure in the plenum chamber can still blow back this electrode to a cutting position). This new "forward flow" cooling design cools the consumables at the location where the majority of the heat of the plasma arc torch is generated (e.g., at the insert of the electrode). Therefore, the electrodes do not require a heat exchanger at the proximal end of the electrode as shown in FIG. **1.**

The electrode (e.g., electrode **300** of FIG. **3**) can have a solid base with an inner hole to reduce temperature conduction within the electrode. A large temperature difference between the electrode and the cooling gas is created to drive heat into the cooling gas at the electrode tip. This drastically reduces the heat flow into the electrode body, thus extending the life of the electrode and other consumables. In addition, the plasma arc torch can operate at lower temperatures for any given gas flow and extremely high gas flows are no longer needed to adequately cool the consumables. Moreover, higher operating currents (e.g., greater than 150 Amps) can be achieved due to the drastically increased cooling of the consumables.

The forward flow cooling design also allows a workpiece to be cut without substantially heating up the torch body and handle. The heat generated by the plasma arc torch near the tip of the electrode at the insert is moved forward during cooling and is not moved backward toward the torch body and handle. This not only provides more efficient cooling, but also increases operator safety as the most likely locations an operator would touch on a plasma arc torch (e.g., the handle and torch body) are not as hot as prior art plasma arc torches. In addition, the handles of a plasma arc torch can be smaller because the handles are not required to absorb as much heat as they had to in prior art plasma arc torches. Moreover, the consumables can be made of less copper since the cooling is more efficient. For example, the back end of the electrode closest to the handle can be made of less copper than prior art electrodes since the heat generated by the plasma arc torch near the tip of the electrode at the insert is moved forward during cooling and is not moved backward toward the torch body and handle. Therefore, the consumables can be made with less copper and are less expense than prior art consumables.

In addition, the extended consumables and forward flow design of the present invention reduces the need for extremely high gas flows. With the new forward flow design, the same amount of heat can be removed from the tip of the electrode using less gas than was previously required for prior art consumable designs. This is due, in part, to the cooling gas moving in a single direction (forward, or toward the electrode insert), instead of flowing both forward and backward to cool the consumables.

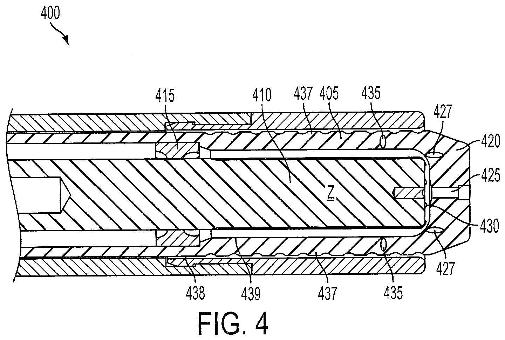

FIG. **4** shows a torch tip **400,** with elongated consumables, including a nozzle **405,** electrode **410** and swirl ring **415,** that can be used in a plasma arc torch operated at high currents and entirely gas cooled. The nozzle **405** has an end face **420** through which a plasma exit orifice **425** is disposed. The end face **420** can also have at least one supplemental orifice **427** disposed relative to the plasma exit orifice **425.** The supplemental orifices **427** can be located beyond an end face **430** of the electrode **410.**

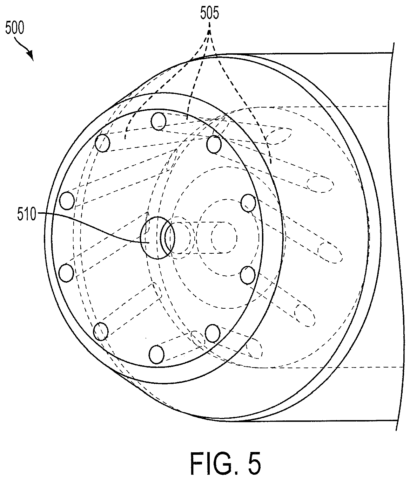

The supplemental orifice **427** can be canted or it can be straight or linear. Canted supplemental orifices can provide a swirling component to the cooling gas exiting the nozzle to direct the cooling gas away from the cut zone. FIG. **5** shows a nozzle **500** with canted or angled supplemental orifices **505.** As shown in FIG. **5,** the supplemental orifices **505** are disposed relative to the plasma exit orifice **510.** The plasma arc exits the plasma arc torch through the plasma exit orifice **510** when the torch is in operation. The cooling gas can exit through the supplemental orifices **505** to provide cooling at the tip of a consumable set. In some embodiments, substantially all the cooling gas (e.g., greater than about 95% of the cooling gas) exits through the supplemental orifices **505.**

Referring back to FIG. **4,** the body of the nozzle **405** can have at least one orifice **435** disposed there through. In some embodiments, the nozzle **405** has both the supplemental orifices **427** and the orifices **435.** The orifices **435** can be canted/angled or straight/linear.

Substantially all the cooling gas can be used to cool the consumables at the tip of the plasma arc cutting torch and substantially all the cooling gas can exit through the supplemental orifices **427** and/or the orifices **435.** In this way, all of the cooling gas is flowed down the outside of the electrode and/or the outside of the nozzle, to cool the consumables at the point where the majority of the heat is generated in the plasma arc torch (e.g., at or near the insert of the electrode). This forward flow method results in a plasma arc torch being entirely gas cooled and capable of operating at currents greater than 15 Amps (or greater than 45 Amps, or greater than 60 Amps, or greater than 90 Amps, or greater than 150 Amps) without premature consumable failure.

The supplemental orifices **427** and the orifices **435** can be sized so that substantially all of the cooling gas flows through the supplemental orifices **427** and the orifices **435.**

To further cool the consumables, heat exchanging elements **437** can be disposed on the nozzle body. The heat exchanging elements **437** can be bumps, grooves, channels, texturing, protuberances, protrusions, and/or fins. The heat exchanging elements **437** are in thermal communication with a cooling gas and provide added surface area to increase the heat transfer coefficient and heat transfer rate. In some embodiments, the heat exchanging elements **437** are disposed on an outer surface **438** of the nozzle **405,** as shown in FIG. **4.** In some embodiments, the heat exchanging elements **437** are disposed on an inner surface **439** of the nozzle **405.** The heat exchanging elements **437** can be disposed on both the outer surface **438** and inner surface **439** of the nozzle **405.**

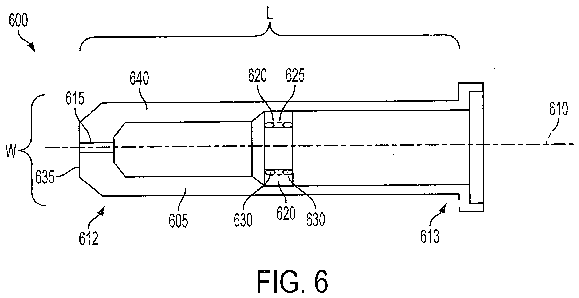

In some embodiments, the nozzle can include an integrally formed structure forming a nozzle assembly **600** of FIG. **6.** The nozzle assembly **600** can include a substantially hollow, elongated body **605.** The elongated body **605** defines a longitudinal axis **610.** The assembly body **605** has a length **L** only the axis from a first end **612** to a second end **613** of the body **605.** The nozzle assembly **600** has a plasma exit orifice **615** disposed at the first end **612** of the body **605.**

The nozzle assembly includes a structure **620** that is integrally formed with the nozzle body **605.** In some embodiments, the structure **620** is removable from the nozzle body **605.** The structure **620** can be, for example, a swirl ring that can control the orientation of the cooling gas flow. The structure **620** is configured to translatably receive an electrode such that blowback torch technology can be used. For example, an inner surface of the structure **620** can be a bearing surface that can allow the electrode to slide within the structure **620.** The structure **620** includes a body **625** with canted gas ports **630** to provide a swirling plasma gas during operation of the plasma arc cutting torch.

The structure **620** can be embedded in the nozzle body **605,** such that it is not removable. The inner diameter of the nozzle body **605** can be substantially the same as the outer diameter of the structure **620.** The structure **620** can be used to align a bore of an electrode with the plasma exit orifice **615.** The structure **620** can be sized such that the bore of the electrode axially aligns with the plasma exit orifice when the electrode is disposed within the hollow body of the nozzle. For example, the outer diameter of the electrode and be substantially the same as the inner diameter of the structure **620,** thus aligning the electrode bore with the plasma exit orifice.

The alignment feature of the structure **620** is particularly useful when long, pointy consumables are used within a plasma arc torch. Because of the length of the consumables, the electrode can be tilted or angled with respect to a longitudinal axis **610.** This tilting or angling of the electrode within the nozzle is particularly pronounced when alignment of the electrode occurs at the back or proximal end of the torch tip. When the electrode bore and plasma exit orifice of the nozzle are misaligned, double arcing or poor torch performance can occur.

To ensure proper alignment of the electrode bore and the plasma exit orifice, the structure **620** of FIG. **6** can be used to align the electrode and nozzle. As shown in FIG. **6,** the alignment occurs close to the tip of the nozzle/electrode ensuring alignment of the electrode and nozzle. Moreover, aligning the electrode and nozzle at the tip of the torch aligns the electrode along the longitudinal axis **610** of the nozzle, thus decreasing or eliminating any tilting or angling of the electrode.

In addition to the aligning feature of the structure **620,** the structure **620** also isolates the electrode from the nozzle. For example, the structure electrically isolates the electrode from the nozzle. The structure **620** can be for example, non-conductive (e.g., made from a non-conductive material) to electrically isolate the electrode from the nozzle.

The length of the nozzle assembly can be greater than about 5.1 cm (2 inches). The length of the nozzle assembly can be greater than about 7.6, 10.2, 12.7, 15.2, 17.8, 20.3, 22.9, 25.4, 27.9, 30.5, 33.0, 35.6, 38.1, 40.7, 43.2, 45.7, 48.3, or 50.8 cm (3, 4, 5, 6, 7, 8, 9, 10, 11, 12, 13, 14, 15, 16, 17, 18, 19, or 20 inches). The length of the nozzle assembly can be greater than about 6.4, 8.9, 11.4, 14.0, 16.5, 19.1, 21.6, 24.1, 26.7, 29.2, 31.8, 34.3, 36.8, 39.4, 41.9, 44.5, 47.0, 49.5, or 52.1 cm (2.5, 3.5, 4.5, 5.5, 6.5, 7.5, 8.5, 9.5, 10.5, 11.5, 12.5, 13.5, 14.5, 15.5, 16.5, 17.5, 18.5, 19.5, or 20.5 inches). Although specific numbers are listed herein for the length and/or width of the nozzle, those of ordinary skill in the art would readily recognize that other lengths and widths can be used without departing from the scope of the invention. For example, the nozzle assembly can have a length greater than about 53.3 cm (21 inches) without departing from the scope of the invention.

The nozzle assembly can have a ratio or L/W of at least about 2. The ratio of the length to the width of the nozzle assembly can be greater than about 4, 5, 6, 7, 8, 9, 10, 11, 12, 13, 14, 15, 16, 17, 18, 19, or 20. The ratio of the length to the width of the nozzle assembly can be greater than about 4.5, 5.5, 6.5, 7.5, 8.5, 9.5, 10.5, 11.5, 12.5, 13.5, 14.5, 15.5, 16.5, 17.5, 18.5, 19.5, or 20.5. Although specific ratios of L/W are listed herein, those of ordinary skill in the art would readily recognize that other lengths and widths can be used without departing from the scope of the invention. For example, the nozzle assembly can have a ratio greater than about 21 without departing from the scope of the invention.

Similar to the nozzle **405** of FIG. **4,** the nozzle assembly **600** can have at least one supplemental orifice (not shown) disposed through at least one of an end face **635** of the nozzle assembly **600** or a side wall **640** relative to the plasma exit orifice **615.** The supplemental orifice can be canted and substantially all of the cooling gas can exit through the at least one supplemental orifice (located in the end face and/or the side wall of the nozzle).

The nozzle assembly **600** can have at least one heat exchanging element (not shown) disposed on the nozzle body **605** and in thermal communication with a cooling gas. The heat exchanging elements can be disposed on an outer and//or inner surface of the nozzle body **605.**

Referring to FIG. **3,** the electrode **300** can include a heat transfer zone **Z** located relative to the first body portion **315** at the first end **307** of the electrode body **305.** The heat transfer zone **Z** can be an area of the outer surface of the electrode **300** from which heat is transferred from the electrode to a cooling gas. The area or heat transfer zone **Z** can include an area of any heat exchanging elements that can be disposed on the outer surface of the electrode **300** (e.g., similar to the heat exchanging elements described with respect to the nozzle). During operating of the plasma arc torch (e.g., at a current greater than about 15 Amps), the heat transfer zone **Z** is in thermal communication with a cooling gas and is configured such that a majority of heat generated during the operation of the plasma torch is removed from the heat transfer zone **Z.** The specific amount of heat removed can depend on the specific operating parameters of the plasma arc torch. For example, a torch operated at a current of about 15 Amps will require less heat to be removed from the heat transfer zone than a torch operated at a current of about 60 Amps. This is because a torch operated at a higher current generates more heat than a torch operated at a lower current. The amount of heat removed from the heat transfer zone should be sufficient to prevent premature failure (e.g., melting) of the consumables. One of ordinary skill in the art would readily appreciate the amount of heat required to be removed from the heat transfer zone to prevent premature failure of the consumables.

The heat transfer zone **Z** can be greater than about 6.5 cm$^2$ (1 square inch). In some embodiments, the heat transfer zone **Z** can be between about 6.5 cm$^2$ (1 square inch) and about 19.4 cm$^2$ (3 square inches). For example, the heat transfer zone **Z** can be 7.1, 7.7, 8.4, 9.0, 9.7, 10.3, 11.0, 11.6, 12.3, 12.9, 13.5, 14.2, 14.8, 15.5, 16.1, 16.8, 17.4, 18.1, or 18.7 cm$^2$ (1.1, 1.2, 1.3, 1.4, 1.5, 1.6, 1.7, 1.8, 1.9, 2, 2.1, 2.2, 2.3, 2.4, 2.5, 2.6, 2.7, 2.8, or 2.9 square inches). Although specific numbers are listed herein for the heat transfer zone of the electrode, those of ordinary skill in the art would readily recognize that other areas can be used without departing from the scope of the invention. For example, the electrode can have a heat transfer zone greater than about 19.4 cm$^2$ (3 square inches) or greater than about 22.6 cm$^2$ (3.5 square inches) without departing from the scope of the invention. In some examples, the heat transfer zone is less than about 6.5 cm$^2$ (1 square inch), e.g., the heat transfer zone can be about 4.8 or 3.2 cm$^2$ (0.75 or 0.5 square inches).

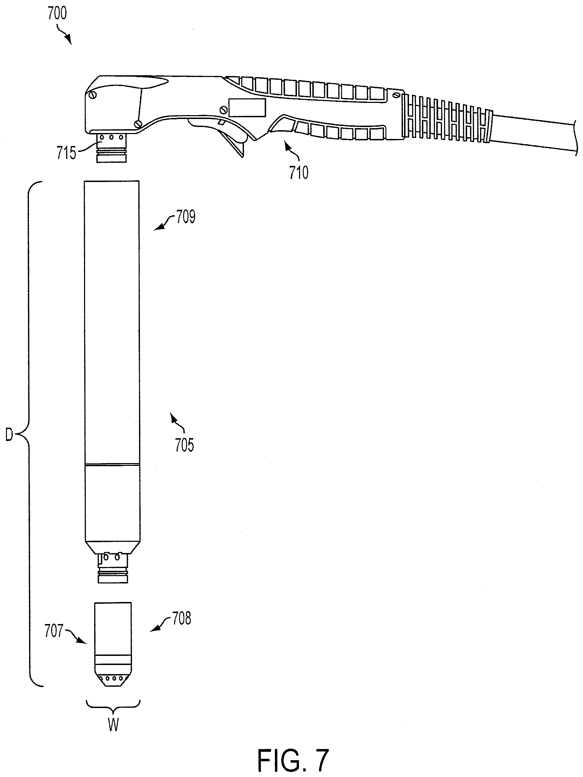

FIG. 7 shows a plasma arc torch system **700,** including a housing **705** disposed relative to a consumable set **707,** including a nozzle (not shown) and an electrode (not shown) of a plasma arc torch **710.** The housing **705** and consumable set **707** forms an assembled torch tip having a distal end **708** and a proximal end **709.** The proximal end **709** of the torch tip is configured to couple to a torch tip mount **715.** For example, the proximal end **709** of the torch tip can couple to the torch tip mount **715** via threads.

The nozzle of the torch tip/consumable set **707** can be any of the nozzle embodiments described herein. The electrode of the torch tip/consumable set **707** can be any of the electrode embodiments described herein.

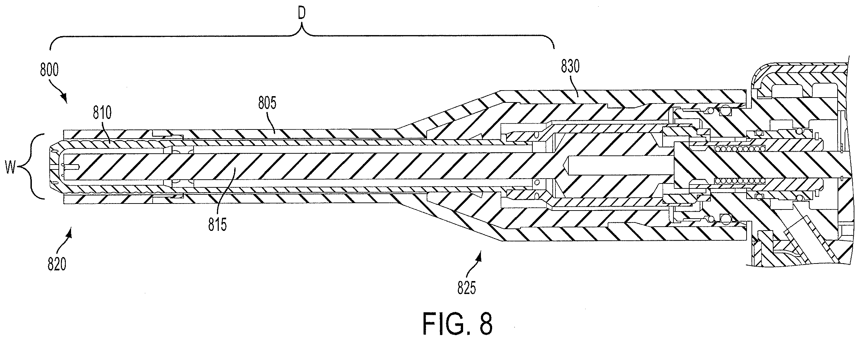

In some embodiments, as shown in FIG. 7, the housing **705** is an adapter or extender that can be used with prior art consumables **707** to extend the torch tip to reach into hard to access areas. For example, the housing **705** can extend the distance from the distal end **708** to the proximal end **709** of the assembled torch tip. In other embodiments, as shown in FIG. **8,** elongated consumables are used and a housing **805** is used to accommodate the consumables.

FIG. 8 shows a torch tip **800** for a hand held plasma arc torch the includes a substantially hollow nozzle **810,** an electrode **815** disposed relative to the nozzle, and a housing 805 disposed relative to the nozzle **810** and the electrode **815.** The nozzle **810,** electrode **815,** and housing **805** form an assembled torch tip having a distal end **820** and a proximal end **825.** The proximal end **825** is configured to couple to a torch tip mount (not shown) of the plasma arc torch (not shown).

As shown in FIG. **8,** the nozzle **810** and/or electrode **815** can be elongated. The nozzle **810** can be any nozzle embodiment described herein. The electrode **815** can be any electrode described herein. The electrode **815** can be designed such that there is no heat exchanger at the proximal end **825** of the electrode **815.** The elimination of the heat exchanger at the proximal end **825** of the electrode **815** further increases the pointiness of the electrode **815.**

The distance **D** from the distal end to the proximal end of the assembled torch tip of either of FIGS. 7 or **8,** can be greater than about 12.7, 15.2, 17.8, 20.3, 22.9, 25.4, 27.9, 30.5, 33.0, 35.6, 38.1, 40.7, 43.2, 45.7, 48.3, or 50.8 cm (5, 6, 7, 8, 9, 10, 11, 12, 13, 14, 15, 16, 17, 18, 19, or 20 inches). Distance **D** from the distal end to the proximal end of the assembled torch tip of either of FIGS. 7 or 8 can be greater than about 17.8, 20.3, 22.9, 25.4, 27.9, 30.5, 33.0, 35.6, 38.1, 40.7, 43.2, 45.7, 48.3, or 50.8 cm (4.5, 5.5, 6.5, 7.5, 8.5, 9.5, 10.5, 11.5, 12.5, 13.5, 14.5, 15.5, 16.5, 17.5, 18.5, 19.5, or 20.5 inches). Although specific numbers are listed herein for the distance from the distal end to the proximal end of the assembled torch tip, those of ordinary skill in the art would readily recognize that other lengths can be used without departing from the scope of the invention. For example, the torch tip can have a length greater than about 53.3 cm (21 inches) without departing from the scope of the invention.

In some embodiments a ratio of the length **D** of the assembled torch tip to a width **W** of the assembled torch tip of either of FIGS. 7 or 8 can be greater than about 3, 4, 5, 6, 7, 8, 9, 10, 11, 12, 13, 14, 15, 16, 17, 18, 19, or 20. The ratio of the length **D** of the assembled torch tip to a width **W** of the assembled torch tip of either of FIGS. 7 or 8 can be greater than about 4.5, 5.5, 6.5, 7.5, 8.5, 9.5, 10.5, 11.5, 12.5, 13.5, 14.5, 15.5, 16.5, 17.5, 18.5, 19.5, or 20.5. Although specific numbers are listed herein for the ratio, those of ordinary skill in the art would readily recognize that other ratios can be used without departing from the scope of the invention. For example, the torch tip can have a ratio greater than about 21 without departing from the scope of the invention.

In addition to the nozzle **810** and electrode **815** being elongated, a retaining cap **830** can also be extended to accommodate the extended nozzle **810** and electrode **815.** The additional length of the retaining cap **830** can protect the consumables and/or operator. The longer consumables allow an operator to be physically farther away from the plasma arc than when prior art consumables are used resulting in greater safety for the operator. The retaining cap **830** can also allow for shield cooling flow for consumables because the inner surface of the retaining cap **830** can be used a part of the gas channel to flow gas down the shield. The retaining cap can have a plastic sheath which extends nearly the entire length of the nozzle. At the terminating end of the retaining cap (e.g., the end near the tip of the electrode and closest to the heat generation when the plasma arc torch is operated) an anodized aluminum tip can be added for heat protection. The entire outer surface of the retaining cap can then be electrically floating from the electrode and nozzle.

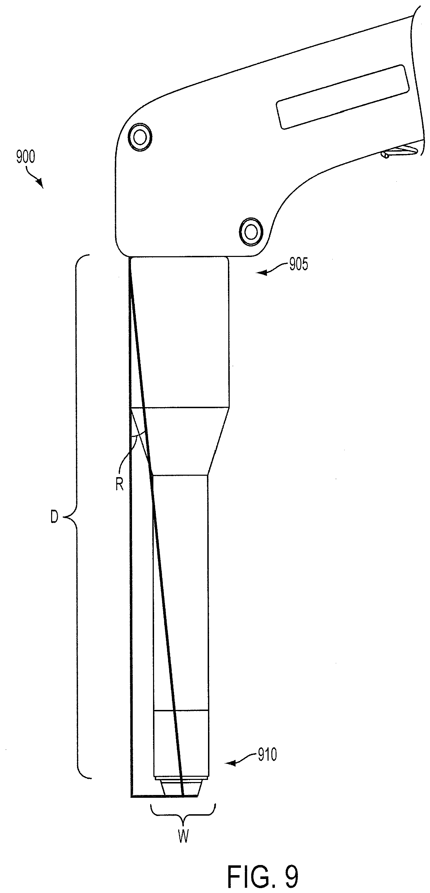

FIG. **9** shows a torch tip **900.** The torch tip **900** includes an extended/elongated electrode, nozzle, and retaining cap. These extended consumables add length to the torch tip **900.** For example, the extended consumables can add about 6.4 cm (2.5 inches) to standard, prior art consumables. Therefore, the distance **D** from the proximal end **905** to the distal end **910** of the torch tip **900** can be about 12.1 cm (4.75 inches). The width **W** of the torch tip **900** can be about 1.4 cm (0.56 inches). The small outer diameter **W** can allow the torch tip to reach into tight spaces. The ratio of the distance **D** to the width **W** of the torch tip **900** (4.75/0.56) is about 8.48.

The thin outer diameter or width **W** also increases the reach angle **R** of the plasma arc torch when compared to prior art torches. The reach angle **R** is the angle created by the widest width of the consumables and the length of the consumables as measured from a longitudinal axis of the consumables. The reach angle can be less than about 20°, less than about 15°, less than about 10° or less than about 6°.

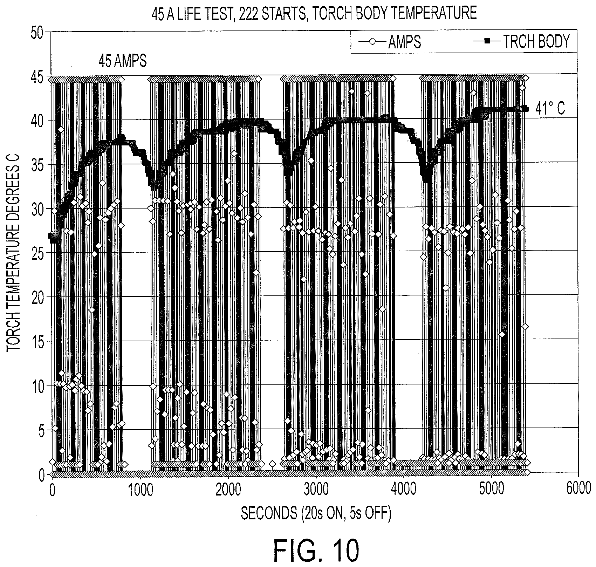

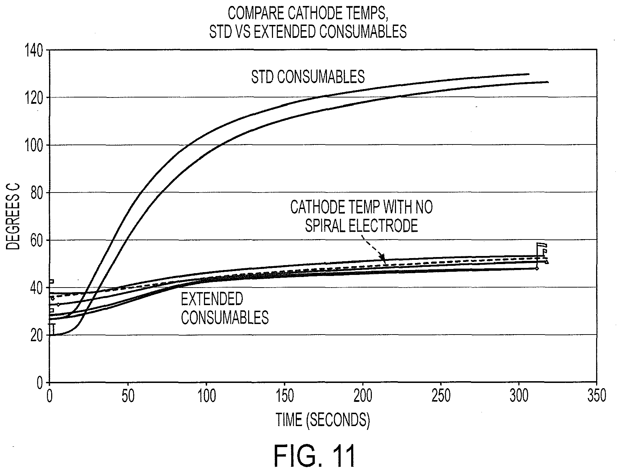

FIGS. **10** and **11** are graphs that show how using the extended consumables with the forward flow methods described herein decrease the temperature of the plasma arc torch during operation. For example, FIG. **10** shows the torch temperature in degrees Celsius versus time during operation of a plasma arc torch at 45 Amps. The plasma arc torch was operated for 20 seconds and then shut off for five seconds. This was repeated 222 times. The large vertical gaps indicate a change in the consumable set. As shown on the graph, the highest temperature incurred by the torch body and consumables is 41° C. Prior art consumables typically reach temperatures in excess of 120° C.

FIG. **11** is a graph comparing the temperature of standard consumables to the extended consumables used with the forward flow methods described herein for a plasma arc torch operating at 30 Amps. The standard consumables reach temperatures in excess of 120° C. The highest temperature reached by the extended consumables is 54° C.

The heat transfer of the forward flow design of the consumables that provides such drastic temperature reduction in the plasma arc torch can be expressed by EQNS. 1-3, where Q is the heat into the electrode and nozzle caused by the electrical arc, A is the total (electrode and nozzle) heat transfer surface, $h_{AVG}$ is the heat transfer coefficient of the heat exchange surfaces of the electrode and nozzle, $T_{SURFACE}$ is the local surface temperature of the heat exchange surface and $T_b$ is the local bulb temp of gas (air).

$$Q = Ah_{AVG}\Delta T \qquad \text{EQN. 1}$$

$$A = A_{ELECTRODE} + A_{NOZZLE} \qquad \text{EQN. 2}$$

$$\Delta T = T_{SURFACE} - T_b \qquad \text{EQN. 3}$$

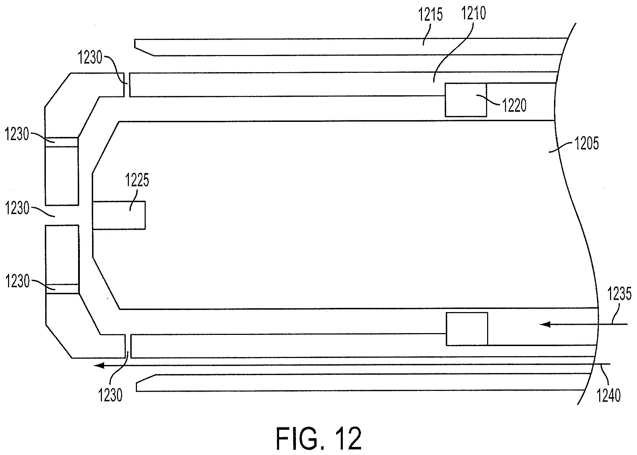

FIG. **12** shows a torch tip **1200** including an electrode **1205,** a nozzle **1210,** a shield **1215,** and a swirl ring **1220.** The electrode **1205** has an insert **1225,** e.g., hafnium. The nozzle **1210** includes gas exits **1230.** Cooling gas (e.g., air) **1235** can flow between the electrode **1205** and the nozzle **1210** and shield gas **1240** can flow between the nozzle **1210** and the shield **1215.** The cooling gas **1235** and the shield gas **1240,** in combination, cool the consumables at the torch tip.

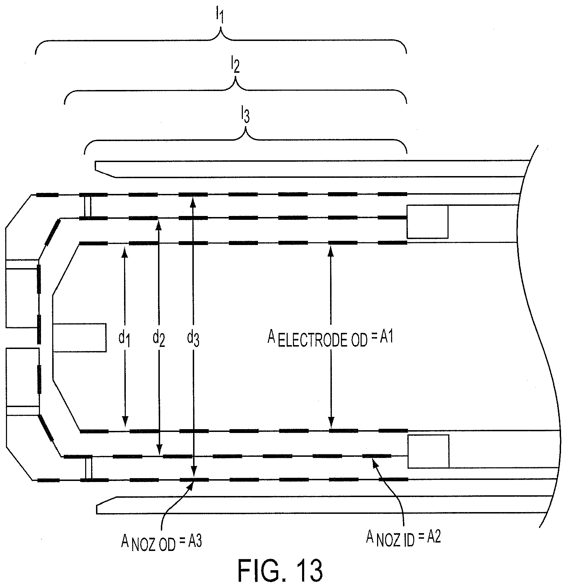

Referring to FIG. **13,** the total area of the electrode and nozzle that is the heat transfer area can be calculated based on EQNS. 4-7, where d is the diameter and l is the length.

$$A_1 = \pi d_1 l_1 = A_{\text{Electrode Surface}} \qquad \text{EQN. 4}$$

$$A_2 = \pi d_2 l_2 = A_{\text{nozzle ID Surface}} \qquad \text{EQN. 5}$$

$$A_3 = \pi d_3 l_3 = A_{\text{nozzle OD Surface}} \qquad \text{EQN. 6}$$

$$A = A_1 + A_2 + A_3 \qquad \text{EQN. 7}$$

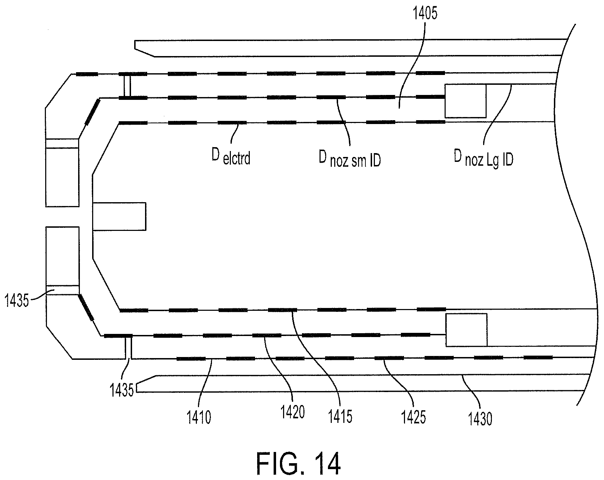

Referring to FIG. **14** and EQN. 1, there are several factors that should be taken into consideration when calculating $h_{AVG}$. First, the dimension of the gap **1405** between the nozzle inner diameter and the electrode. For example, if the diameter of the small nozzle inner diameter minus the diameter of the electrode is less than the diameter of the large nozzle inner diameter minus the diameter of the electrode (see, e.g., EQN. **8** in conjunction with FIG. **14**) then a pressure drop will be created across the swirl ring that can affect the velocity and pressure of the cooling gas.

$$(D_{\text{noz sm ID}} - D_{\text{elctrd}}) < (D_{\text{noz lg ID}} - D_{\text{elctrd}}) \qquad \text{EQN. 8}$$

In addition, the dimension of the gap **1410** between the outer diameter of the nozzle and the shield can affect the velocity and pressure of the shield gas. Any heat exchanging features on any of the heat exchanging surfaces (outer surface of the electrode **1415,** inner or outer surface of the nozzle **1420, 1425** respectively, or inner surface of the shield **1430**) can create turbulence and shrink the boundary layer to increase convection in the cooling gas flow and/or shield gas flow. Moreover, the exit holes **1435** can affect the boundary layer and turbulence of the cooling gas based on the diameter and location of the exit holes **1435**. Gravity and gas properties of the cooling and shield gas can also be taken into consideration when calculating $h_{AVG}$.

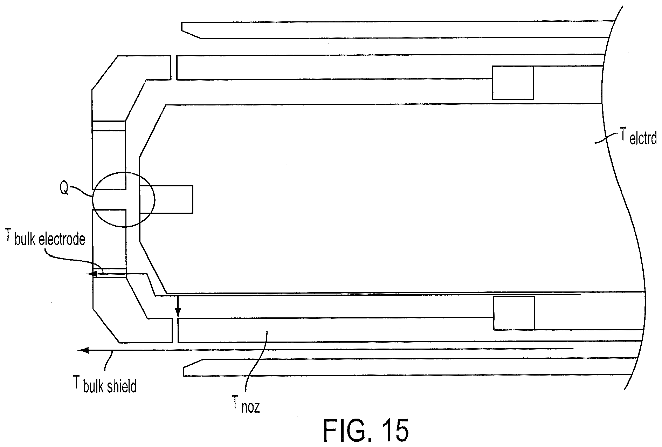

Referring to FIG. **15**, the heat into the electrode and nozzle caused by the electrical arc can also be calculated by EQN 9.

$$Q = A_1 h_1 (T_{elct} - T_{bulk\ elctrd}) + A_2 h_2 (T_{noz} - T_{bulk\ elctrd}) + A_3 h_3 (T_{noz} - T_{bulk\ shield}) \qquad EQN.\ 9$$

Although the embodiments of the present invention are described in relation to a hand held plasma arc torch, the embodiments are equally applicable to a mechanized torch. One of ordinary skill in the art would readily understand that designing consumables and flow characteristics can be applied to both hand held and mechanized torches.

Methods of cutting workpieces and extending the life of the plasma arc torch can be performed using any of the consumables (e.g., at least one of the nozzle or electrode embodiments) and forward flow cooling methods described herein. The methods can be performed by providing a plasma arc torch that has a body. The body includes a flow path for directing a plasma gas through a swirl ring to a plasma chamber to form a plasma arc. Any one or multiple consumable embodiments described herein can be provided. For example, the nozzle of FIG. **2** can be provided, the nozzle assembly of FIG. **6** can be provided, or the electrode of FIG. **3** can be provided. In some embodiments, both the nozzle of FIG. **2** and the electrode of FIG. **3** can be provided or the nozzle assembly of FIG. **6** and the electrode of FIG. **3** can be provided.

The plasma arc torch can be operated at an amperage level of at least about 15 Amps. In some embodiments, the plasma arc torch is operated at an amperage level of at least about 30 Amps, at least about 45 Amps, at least about 60 Amps, at least about 80 Amps, at least about 100 Amps, at least about 120 Amps, at least about 150 Amps, or at least about 200 Amps.

The methods also include flowing substantially (e.g., greater than about 95%) of a cooling gas through at least one supplemental orifice at a distal end of a torch body (e.g., the supplemental orifices of the nozzle).

**Claims**

1. A torch tip for a handheld plasma torch, the handheld plasma torch having a trigger and a torch tip mount, the torch tip (400, 800, 1200) comprising:

   a substantially hollow nozzle (405, 810, 1210), the nozzle having an end face (420) through which a plasma exit orifice (425) is disposed;
   an electrode (410, 815, 1205) disposed relative to the nozzle (405, 810, 1210);
   the nozzle being mounted relative to the electrode to define a plasma chamber;
   a swirl ring (415, 1220), such that a cooling gas can flow between the electrode and nozzle, passing through the swirl ring and flowing through the plasma chamber and out the end face (420) of the nozzle; and
   a housing (805) disposed relative to the nozzle (405, 810, 1210) and the electrode (410, 815, 1205),
   the nozzle (405, 810, 1210), electrode and housing (805) forming an assembled torch tip having a distal end (820) and a proximal end (825), the proximal end (825) of the assembled torch tip configured to couple to the torch tip mount, the torch tip being **characterised by**
   the end face (420) having at least one supplemental orifice (427) disposed relative to the plasma exit orifice (425); such that in use substantially all of the cooling gas can be used to cool the consumables at the tip of the torch and
   substantially all of the cooling gas can exit through the supplemental orifices (427),
   wherein a distance from the distal end to the proximal end of the assembled torch tip is greater than about 7.6 cm (3 inches).

2. The torch tip of claim 1, wherein the nozzle (405, 810, 1210) is elongated wherein optionally, the nozzle (405, 810, 1210) has a length along a longitudinal axis extending from a first end of the nozzle and a second end of the nozzle, the length from the first end to the second end of the nozzle greater than about 5.1 cm (2 inches).

3. The torch tip of claim 1, wherein the electrode (410, 815, 1205) is elongated.

4. The torch tip of claim 1, wherein the housing comprises an adapter capable of extending the distance from the distal end to the proximal end of the assembled torch tip.

**5.** The torch tip of claim 1, wherein:

the distance from the distal end to the proximal end of the assembled torch tip is greater than about 12.7 cm (5 inches);
the distance from the distal end to the proximal end of the assembled torch tip is greater than about 17.8 cm (7 inches);
the distance from the distal end to the proximal end of the assembled torch tip is greater than about 22.9 cm (9 inches); or
the distance from the distal end to the proximal end of the assembled torch tip is greater than about 28.0 cm (11 inches).

**6.** The torch tip of claim 1, wherein the torch tip (400) further comprises at least one heat exchanging element (437) disposed on the nozzle (405) and in thermal communication with a cooling gas, wherein the heat exchanging elements are bumps, grooves, channels, texturing, protuberances, protrusions, and/or fins, and wherein optionally, the at least one heat exchanging element (437) is disposed on an outer surface (438) of the nozzle wherein more optionally the at least one heat exchanging element is disposed on an inner surface (439) of the nozzle.

**Patentansprüche**

**1.** Brennerspitze für einen Handplasmabrenner, wobei der Handplasmabrenner einen Auslöser und eine Brennerspitzenhalterung aufweist, wobei die Brennerspitze (400, 800, 1200) Folgendes umfasst:

eine im Wesentlichen hohle Düse (405, 810, 1210), wobei die Düse eine Endfläche (420) aufweist, durch die eine Plasmaaustrittsöffnung (425) angeordnet ist;
eine Elektrode (410, 815, 1205), die in Bezug zur Düse (405, 810, 1210) angeordnet ist;
wobei die Düse in Bezug zur Elektrode montiert ist, um eine Plasmakammer zu definieren;
einen Wirbelring (415, 1220), sodass ein Kühlgas zwischen der Elektrode und der Düse strömen, durch den Wirbelring verlaufen und durch die Plasmakammer und aus der Endfläche (420) der Düse heraus strömen kann; und
ein Gehäuse (805), das in Bezug zur Düse (405, 810, 1210) und zur Elektrode (410, 815, 1205) angeordnet ist, wobei die Düse (405, 810, 1210), die Elektrode und das Gehäuse (805) eine montierte Brennerspitze ausbilden, die ein distales Ende (820) und ein proximales Ende (825) aufweist, wobei das proximale Ende (825) der montierten Brennerspitze dazu ausgelegt ist, sich mit der Brennerspitzenhalterung zu koppeln, wobei die Brennerspitze **dadurch gekennzeichnet ist,**
**dass** die Endfläche (420) mindestens eine zusätzliche Öffnung (427) aufweist, die in Bezug zur Plasmaaustrittsöffnung (425) angeordnet ist; sodass bei der Verwendung im Wesentlichen das gesamte Kühlgas dazu verwendet werden kann, das Verbrauchsmaterial an der Spitze des Brenners zu kühlen und im Wesentlichen das gesamte Kühlgas durch die zusätzlichen Öffnungen (427) austreten kann,
wobei die Entfernung vom distalen Ende zum proximalen Ende der montierten Brennerspitze größer als etwa 7,6 cm (3 Zoll) ist.

**2.** Brennerspitze nach Anspruch 1, wobei die Düse (405, 810, 1210) länglich ist, wobei die Düse (405, 810, 1210) optional eine Länge entlang einer Längsachse aufweist, die sich von einem ersten Ende der Düse und einem zweiten Ende der Düse erstreckt, wobei die Länge vom ersten Ende zum zweiten Ende der Düse größer als etwa 5,1 cm (2 Zoll) ist.

**3.** Brennerspitze nach Anspruch 1, wobei die Elektrode (410, 815, 1205) länglich ist.

**4.** Brennerspitze nach Anspruch 1, wobei das Gehäuse einen Adapter umfasst, der dazu funktionsfähig ist, sich über die Entfernung vom distalen Ende zum proximalen Ende der montierten Brennerspitze zu erstrecken.

**5.** Brennerspitze nach Anspruch 1, wobei:

die Entfernung vom distalen Ende zum proximalen Ende der montierten Brennerspitze größer als etwa 12,7 cm (5 Zoll) ist;
die Entfernung vom distalen Ende zum proximalen Ende der montierten Brennerspitze größer als etwa 17,8 cm (7 Zoll) ist;

die Entfernung vom distalen Ende zum proximalen Ende der montierten Brennerspitze größer als etwa 22,9 cm (9 Zoll) ist

oder

die Entfernung vom distalen Ende zum proximalen Ende der montierten Brennerspitze größer als etwa 28,0 cm (11 Zoll) ist.

6. Brennerspitze nach Anspruch 1, wobei die Brennerspitze (400) ferner mindestens ein Wärmetauscherelement (437) umfasst, das an der Düse (405) angeordnet ist und mit einem Kühlgas in Wärmeverbindung steht, wobei die Wärmetauscherelemente Erhebungen, Nuten, Kanäle, Strukturen, Protuberanzen, Vorsprünge und/oder Lamellen sind und wobei optional das mindestens eine Wärmetauscherelement (437) auf einer Außenfläche (438) der Düse angeordnet ist, wobei weiter optional das mindestens eine Wärmetauscherelement auf einer Innenfläche (439) der Düse angeordnet ist.

## Revendications

1. Bec de torche pour une torche à plasma portative, la torche à plasma portative ayant une gâchette et une monture de bec de torche, le bec de torche (400, 800, 1200) comprenant :

une buse sensiblement creuse (405, 810, 1210), la buse ayant une face d'extrémité (420) à travers laquelle se trouve un orifice de sortie de plasma (425) ;
une électrode (410, 815, 1205) disposée par rapport à la buse (405, 810, 1210) ;
la buse étant montée par rapport à l'électrode pour définir une chambre à plasma ;
un anneau de tourbillon (415, 1220), de sorte qu'un gaz de refroidissement puisse s'écouler entre l'électrode et la buse, passer à travers l'anneau de tourbillon et s'écouler à travers la chambre à plasma et hors de la face d'extrémité (420) de la buse ; et
un boîtier (805) disposé par rapport à la buse (405, 810, 1210) et à l'électrode (410, 815, 1205),
la buse (405, 810, 1210), l'électrode et le boîtier (805) formant un bec de torche assemblé ayant une extrémité distale (820) et une extrémité proximale (825), l'extrémité proximale (825) du bec de torche assemblé étant conçue pour s'accoupler à la monture de bec de torche, le bec de torche étant **caractérisé par**
la face d'extrémité (420) ayant au moins un orifice supplémentaire (427) disposé par rapport à l'orifice de sortie de plasma (425), de sorte que lors de l'utilisation, sensiblement tout le gaz de refroidissement puisse être utilisé pour refroidir les consommables au niveau du bec de la torche et sensiblement tout le gaz de refroidissement puisse sortir par les orifices supplémentaires (427),
la distance entre l'extrémité distale et l'extrémité proximale du bec de torche assemblé étant supérieure à environ 7,6 cm (3 pouces).

2. Bec de torche selon la revendication 1, éventuellement la buse (405, 810, 1210) étant allongée, la buse (405, 810, 1210) ayant une longueur le long d'un axe longitudinal s'étendant d'une première extrémité de la buse à une seconde extrémité de la buse, la longueur de la première extrémité à la seconde extrémité de la buse étant supérieure à environ 5,1 cm (2 pouces).

3. Bec de torche selon la revendication 1, l'électrode (410, 815, 1205) étant allongée.

4. Bec de torche selon la revendication 1, le boîtier comprenant un adaptateur pouvant allonger la distance entre l'extrémité distale et l'extrémité proximale du bec de torche assemblé.

5. Bec de torche selon la revendication 1,

la distance entre l'extrémité distale et l'extrémité proximale du bec de torche assemblé étant supérieure à environ 12,7 cm (5 pouces) ;
la distance entre l'extrémité distale et l'extrémité proximale du bec de torche assemblé étant supérieure à environ 17,8 cm (7 pouces) ;
la distance entre l'extrémité distale et l'extrémité proximale du bec de torche assemblé étant supérieure à environ 22,9 cm (9 pouces) ; ou
la distance entre l'extrémité distale et l'extrémité proximale du bec de torche assemblé étant supérieure à environ 28,0 cm (11 pouces).

6. Bec de torche selon la revendication 1, le bec de torche (400) comprenant en outre au moins un élément d'échange thermique (437) situé sur la buse (405) et en communication thermique avec un gaz de refroidissement, les éléments d'échange thermique étant des bosses, des rainures, des canaux, des textures, des protubérances, des saillies et/ou des ailettes, et éventuellement, l'au moins un élément d'échange thermique (437) étant situé sur une surface extérieure (438) de la buse, plus éventuellement, l'au moins un élément d'échange thermique étant situé sur une surface intérieure (439) de la buse.

FIG. 1

FIG. 2

FIG. 3

FIG. 4

FIG. 5

FIG. 6

700

715

710

709

D

705

707    708

W

FIG. 7

FIG. 8

EP 2 613 905 B1

FIG. 9

FIG. 10

COMPARE CATHODE TEMPS,
STD VS EXTENDED CONSUMABLES

FIG. 11

FIG. 12

FIG. 13

FIG. 14

$T_{elctrd}$

$T_{noz}$

$T_{bulk\ shield}$

$T_{bulk\ electrode}$

Q

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4791268 A
- US 5994663 A
- US 5132512 A
- US 5726415 A